# EUROPEAN PATENT SPECIFICATION

(11) **EP 0 710 220 B1**
(45) Date of publication and mention of the grant of the patent: **11.03.1998**
(21) Application number: 95920812.5
(22) Date of filing: 16.05.1995
(51) Int. Cl.: C03C 13/00

(54) **A MINERAL-FIBER COMPOSITION**
MINERALFASERZUSAMMENSETZUNG
COMPOSITION DE FIBRE MINERALE

(30) Priority: 17.05.1994 DE 4417230; 01.02.1995 DE 19503169
(43) Date of publication of application: 08.05.1996
(73) Proprietor: ISOVER SAINT-GOBAIN, F-92400 Courbevoie (FR)
(72) Inventor: LOHE, Peter, D-67112 Mutterstadt (DE); HOLSTEIN, Wolfgang, D-35315 Homberg (DE); SCHWAB, Wolfgang, D-68723 Plankstadt (DE); MAUGENDRE, Stéphane, F-60460 Précy-sur-Oise (FR)
(74) Representative: Kador & Partner
(86) International application number: EP9501842
(87) International publication number: WO9531410

(56) References cited:
- WO-A-87/05007
- WO-A-89/12032
- WO-A-92/09536
- WO-A-93/15028
- FR-A- 2 690 438
- GB-A- 2 083 017

## Description

The present invention relates to a mineral-fiber composition that is biologically degradable.

The prior art describes some mineral-fiber compositions which are said to be biologically degradable.

The biological degradability of mineral-fiber compositions is of great importance because various studies point out that mineral fibers with very small diameters in the range of less than 3 microns are suspected to be carcinogenic, while biologically degradable mineral fibers of such dimensions show no carcinogenicity.

However, not only the biological degradability is of crucial importance but also the mechanical and thermal properties of the mineral fibers, or the products produced therefrom, and the processibility of the mineral-fiber composition. For example mineral fibers are used to a great extent for insulation purposes. In particular for application in the industrial area sufficient temperature stability of the mineral fibers is necessary.

Also, the mineral-fiber composition must permit processibility by known methods for producing mineral fibers with a small diameter, for example the jet process.

GB-A-2 083 017 discloses glass compositions suitable for the production of fibrous wollastonite which consist of SiO₂, CaO, B₂O₃ and other oxides as optional ingredients.

The inorganic fibers disclosed in FR-A-2 690 438, WO-A-87/05007, WO-A-92/09536 and WO-A-93/15028 comprise silica, calcium oxide and magnesium oxide and are soluble in saline or physiological solutions. Some of these fibers also exhibit a good temperature stability.

Fire resistant fiber compositions which are degradable in physiological saline solutions and have a good temperature stability are disclosed in WO-A-89/12032. These fibers contain SiO₂, CaO, MgO and at least one of Al₂O₃, ZrO₂, TiO₂, B₂O₃, iron oxides or mixtures thereof.

The invention is based on the problem of providing an alternative mineral-fiber composition that is characterized by biological degradability, has good temperature stability and is easy to process.

The invention is based on the finding that this problem can be solved by a mineral-fiber composition that comprises substantially silicon oxide and alkaline earth oxides and that also contains barium oxide.

It has turned out that such mineral-fiber compositions fulfill the combination of the necessary properties, namely biological degradability, temperature stability and good processibility.

The object of the invention is a mineral-fiber composition that is biologically degradable, characterized by the following constituents in percent by weight:

| | |
|---|---|
| SiO₂ | 50 to 60 |
| CaO | 25 to 35 |
| MgO | 1 to 10 |
| Na₂O | 1 to 8 |
| P₂O₅ | 0 to 3 |
| Al₂O₃ | 0 to 2 |
| BaO | 0.5 to 5. |

The inventive mineral-fiber compositions are drawable by the jet process or the rotary process. The obtained fibers have good temperature stability. Surprisingly enough, the mineral-fiber compositions show biological degradability.

The mean fiber diameter is preferably 10 microns or less, and especially between 2.5 and 5 microns.

The inventive mineral-fiber compositions preferably have the following constituents in percent by weight:

| | |
|---|---|
| SiO₂ | 52 to 58 |
| CaO | 28 to 32 |
| MgO | 5 to 10 |
| Na₂O | 3 to 7 |
| P₂O₅ | 0 to 1 |
| Al₂O₃ | 0.5 to 1.5 |
| BaO | 0.5 to 3. |

In another preferred embodiment the aluminum oxide content can be 1 to 2 percent by weight, preferably 1 to 1.5 percent by weight. In another preferred embodiment, however, it is less than 1 percent by weight.

To assess biological degradability the standard powder test of the German Glass Society was used. This is an easily conducted method and gives a sufficient measure of biological degradability. The method is described in L. Springer, "Laboratoriumsbuch für die Glasindustrie", 3rd edition, 1950, Halle/S: W. Knapp Verlag.

The temperature behavior of the mineral fibers was determined by the Swedish method. In this method a silit tube furnace is used with a horizontal working tube open on both sides having a length of 350 mm and an inside diameter of 27 mm. In the center of the furnace there is a small ceramic supporting plate (30 x 20 x 3 mm) for holding the test sample. The test sample has dimensions of 12 x 12 x 12 mm or 12 mm ⌀ x 12 mm height. The bulk density is normally 100 kg/m³. The temperature increase is 5 K/min. The change intest sample height is determined continuously with a reading optic.

The invention shall be described in more detail in the following with reference to examples.

### Example 1

A mineral wool with the following composition in percent by weight was produced:

| | |
|---|---|
| SiO₂ | 56 |
| Al₂O₃ | 1 |
| CaO | 28.5 |
| MgO | 7 |
| Na₂O | 5 |
| BaO | 2.5. |

This composition could be processed well to mineral fibers with a mean diameter of 2.7 microns by the jet process at a drawing temperature of 1350°C.

An investigation according to the standard powder test of the German Glass Society yielded a value of 35 mg/kg and thus a value for high biological degradability.

Determination of temperature behavior by the Swedish method yielded a temperature stability at 5% reduction in height of 720°C.

### Example 2

A mineral wool with the following composition in percent by weight was produced:

| | |
|---|---|
| SiO₂ | 56 |
| Al₂O₃ | 1 |
| CaO | 29 |
| MgO | 8 |
| Na₂O | 5 |
| BaO | 1. |

This composition could be processed well to mineral fibers with a mean diameter of 2.8 microns by the jet process at a drawing temperature of 1360°C.

An investigation according to the standard powder test of the German Glass Society yielded a value of 39 mg/kg and thus a value for high biological degradability.

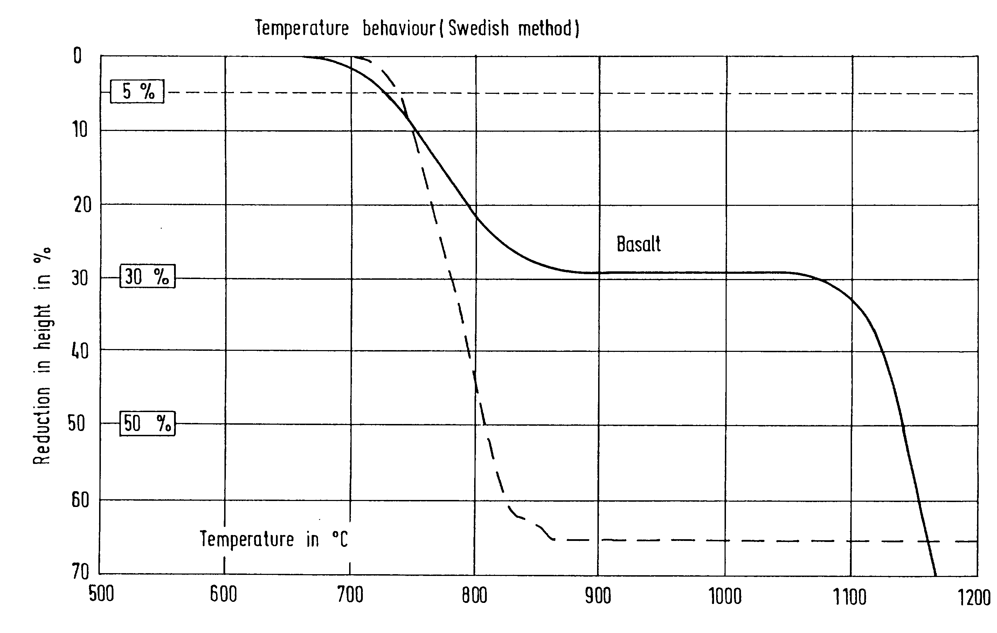

Determination of temperature behavior by the Swedish method yielded a temperature stability at 5% reduction in height of 740°C (see the diagram on the drawing for an illustration of this).

## Claims

1. A mineral-fiber composition that is biologically degradable, **characterized** by the following constituents in percent by weight:
| | |
|---|---|
| SiO₂ | 50 to 60 |
| CaO | 25 to 35 |
| MgO | 1 to 10 |
| Na₂O | 1 to 8 |
| P₂O₅ | 0 to 3 |
| Al₂O₃ | 0 to 2 |
| BaO | 0.5 to 5. |

2. The mineral-fiber composition of claim 1, **characterized** by the following constituents in percent by weight:
| | |
|---|---|
| SiO₂ | 52 to 58 |
| CaO | 28 to 32 |
| MgO | 5 to 10 |
| Na₂O | 3 to 7 |
| P₂O₅ | 0 to 1 |
| Al₂O₃ | 0.5 to 1.5 |
| BaO | 0.5 to 3. |

## Patentansprüche

1. Eine biologisch abbaubare Mineralfaserzusamnensetzung, dadurch gekennzeichnet, daß sie aus den folgenden Bestandteilen in Gewichtsprozent besteht:
| | |
|---|---|
| SiO₂ | 50 bis 60 |
| CaO | 25 bis 35 |
| MgO | 1 bis 10 |
| Na₂O | 1 bis 8 |
| P₂O₅ | 0 bis 3 |
| Al₂O₃ | 0 bis 2 |
| BaO | 0,5 bis 5 |

2. Die Mineralfaserzusammensetzung nach Anspruch 1., dadurch gekennzeichnet, daß sie aus den folgenden Bestandteilen in Gewichtsprozent besteht:
| | |
|---|---|
| SiO₂ | 52 bis 58 |
| CaO | 28 bis 32 |
| MgO | 5 bis 10 |
| Na₂O | 3 bis 7 |
| P₂O₅ | 0 bis 1 |
| Al₂O₃ | 0,5 bis 1,5 |
| BaO | 0,5 bis 3 |

## Revendications

1. Composition pour fibres minérales qui est biodégradable, **caractérisée** par les constituants suivants, en pourcentages massiques:
| | |
|---|---|
| SiO₂ | 50 à 60 |
| CaO | 25 à 35 |
| MgO | 1 à 10 |
| Na₂O | 1 à 8 |
| P₂O₅ | 0 à 3 |
| Al₂O₃ | 0 à 2 |
| BaO | 0,5 à 5. |

2. Composition pour fibres minérales selon la revendication 1, **caractérisée** par les constituants suivants, en pourcentages massiques:
| | |
|---|---|
| SiO₂ | 52 à 58 |
| CaO | 28 à 32 |
| MgO | 5 à 10 |
| Na₂O | 3 à 7 |
| P₂O₅ | 0 à 1 |
| Al₂O₃ | 0,5 à 1,5 |
| BaO | 0,5 à 3 |
